# EUROPEAN PATENT APPLICATION

(11) **EP 4 350 158 A1**
(43) Date of publication of application: **10.04.2024**
(21) Application number: 22810883.3
(22) Date of filing: 25.02.2022
(51) Int. Cl.: F16B 5/08, B62D 25/10

(54) **VEHICULAR PANEL STRUCTURE**

(30) Priority: 26.05.2021 JP 2021088089
(71) Applicant: NIPPON STEEL CORPORATION, Chiyoda-ku Tokyo 100-8071 (JP)
(72) Inventor: YAKUSHIJIN Yutaka, Tokyo 100-8071 (JP); NISHIMURA Ryuichi, Tokyo 100-8071 (JP); SAWA Yasunori, Tokyo 100-8071 (JP)
(74) Representative: Vossius & Partner Patentanwälte Rechtsanwälte mbB
(86) International application number: PCT/JP2022/007782
(87) International publication number: WO 2022/249602

(57) **Abstract**

A vehicle panel structure has: a sheet-like outer panel member; an inner member disposed to face an inner surface of the outer panel member; and a resin member of which a material is a resin and which is joined to the inner surface of the outer panel member, and at least part of the inner member is buried in the resin member.

## Description

### [Technical Field of the Invention]

The present invention relates to a vehicle panel structure. Priority is claimed on Japanese Patent Application No. 2021-88089, filed on May 26, 2021, the content of which is incorporated herein by reference.

### [Background Art]

Currently, there is a demand for technologies for reducing the weight of a vehicle. It is considered that, if high-strengthening of an outer panel constituting a vehicle, such as a roof, a hood, or a door, is possible, a sufficient strength can be maintained even with a small thickness of the outer panel. Therefore, technologies for high-strengthening of an outer panel have been developed in order to reduce the weight of a vehicle.

However, in a case where the outer panel is thin, there is a noticeable lack of panel rigidity. The panel rigidity is a feature indicating the resistance to deflection of the outer panel. For example, in a case where an outer panel of a vehicle has high panel rigidity, the outer panel is hardly deflected when being touched.

As a measure against the lack of panel rigidity, for example, Patent Document 1 describes a technology related to a reinforcing structure for a vehicle body obtained by providing an inner sheet over an outer sheet with a foaming layer interposed therebetween, in which the foaming layer is a thermosetting resin foam with an expansion ratio of 1.03 to 1.30 times.

### [Prior Art Document]

### [Patent Document]

[Patent Document 1] Japanese Unexamined Patent Application, First Publication No. S63-258274

### [Disclosure of the Invention]

### [Problems to be Solved by the Invention]

According to the technology of Patent Document 1, it is said that both high panel rigidity and prevention of the occurrence of strain can be achieved. However, in the technology of Patent Document 1, in a case where the adhesion to an outer panel is not sufficient, it is not possible to sufficiently exhibit high panel rigidity, and this also acts as a factor hindering the weight reduction.

The present disclosure is contrived in view of the above-described problems, and an object of the present disclosure is to provide a vehicle panel structure capable of exhibiting excellent panel rigidity while being lightweight.

### [Means for Solving the Problem]

In order to solve the above-described problems, the present invention employs the following configurations.
(1) An aspect of the present invention is a vehicle panel structure having: a sheet-like outer panel member; an inner member disposed to face an inner surface of the outer panel member; and a resin member of which a material is a resin and which is joined to the inner surface of the outer panel member, in which at least part of the inner member is buried in the resin member.
(2) In the vehicle panel structure according to (1), the inner member may extend along one direction in an in-plane direction of the outer panel member.
(3) In the vehicle panel structure according to (2), a cross-section portion perpendicular to the extending direction of the inner member, in which the inner member is entirely buried in the resin member, may be provided.
(4) In the vehicle panel structure according to (2) or (3), a plurality of the inner members may be provided, and the plurality of inner members may be disposed in parallel to be separated from each other in a direction perpendicular to the one direction in the in-plane direction of the outer panel member.
(5) In the vehicle panel structure according to (1), the inner member may have a sheet-like main body portion disposed to face the inner surface of the outer panel member, the main body portion may have a protrusion portion protruding toward the outer panel member, and a cross-section portion perpendicular to an in-plane direction of the outer panel member, in which a tip end of the protrusion portion is buried in the resin member, may be provided.
(6) In the vehicle panel structure according to (5), a cross-section portion perpendicular to the in-plane direction of the outer panel member, in which a surface of the protrusion portion close to the outer panel member is entirely buried in the resin member, may be provided.
(7) In the vehicle panel structure according to (1), the inner member may have a sheet-like main body portion disposed to face the inner surface of the outer panel member, the main body portion may have a projected portion including a peripheral wall portion which stands up toward the outer panel member and a top portion which is bent and extends from an end edge of the peripheral wall portion on an outer panel member side and has an opening portion formed at a center, and a cross-section portion perpendicular to an in-plane direction of the outer panel member, in which at least part of the top portion is buried in the resin member, may be provided.
(8) In the vehicle panel structure according to (7), a cross-section portion perpendicular to the in-plane direction of the outer panel member, in which the top portion is entirely buried in the resin member, may be provided.
(9) In the vehicle panel structure according to any one of (1) to (8), the resin member may be a thermosetting resin.
(10) In the vehicle panel structure according to any one of (1) to (8), the resin member may be a thermoplastic resin.
(11) In the vehicle panel structure according to any one of (1) to (10), a plurality of the resin members may be provided, and the plurality of resin members may be connected to each other along an in-plane direction of the outer panel member.
(12) In the vehicle panel structure according to (11), the plurality of resin members may be connected to each other with an adhesive.
(13) In the vehicle panel structure according to (11) or (12), the plurality of resin members may be connected to each other by engagement.
(14) In the vehicle panel structure according to any one of (1) to (13), an adhesion portion joining the outer panel member and the resin member and an adhesion portion joining the outer panel member and the inner member may be made of the same material.
(15) In the vehicle panel structure according to any one of (1) to (14), the outer panel member may have a tensile strength of 440 MPa or greater.
(16) In the vehicle panel structure according to any one of (1) to (15), the outer panel member may have a sheet thickness of 0.30 mm or greater and 0.55 mm or less.
(17) In the vehicle panel structure according to any one of (1) to (16), a part having a maximum length in a direction perpendicular to an in-plane direction of the outer panel member of the resin member may have a thickness of 3 mm or greater and 60 mm or less.

### [Effects of the Invention]

According to the above-described vehicle panel structure, the resin member is joined to the inner surface of the outer panel member in a state of being firmly held by the inner member, and thus it is possible to exhibit excellent panel rigidity while achieving lightweight properties.

### [Brief Description of the Drawings]

FIG. 1 is a perspective view of a panel structure according to a first embodiment of the present disclosure viewed from the outside of a vehicle.
FIG. 2 is a perspective view of the panel structure according to the first embodiment viewed from the inside of the vehicle.
FIG. 3 is a cross-sectional view of an inner member of the panel structure according to the first embodiment.
FIG. 4 is a schematic view showing a positional relationship between members in the panel structure according to the first embodiment.
FIG. 5(A) is a cross-sectional view along the arrow A of FIG. 4, and FIG. 5(B) is a cross-sectional view along the arrow B of FIG. 4.
FIG. 6 is a schematic view showing a positional relationship between members in a panel structure according to a first modification example of the first embodiment.
FIG. 7(A) is a cross-sectional view along the arrow C of FIG. 6, and FIG. 7(B) is a cross-sectional view along the arrow D of FIG. 6.
FIG. 8 is a schematic view showing a positional relationship between members in a panel structure according to a second modification example of the first embodiment.
FIG. 9(A) is a cross-sectional view along the arrow E of FIG. 8, and FIG. 9(B) is a cross-sectional view along the arrow F of FIG. 8.
FIG. 10 is a schematic view showing a positional relationship between members in a panel structure according to a third modification example of the first embodiment.
FIG. 11 is a schematic view showing a positional relationship between members in a panel structure according to a fourth modification example of the first embodiment.
FIG. 12 is a schematic view showing a positional relationship between members in a panel structure according to a fifth modification example of the first embodiment.
FIG. 13 is a schematic view showing a positional relationship between members in a panel structure according to a sixth modification example of the first embodiment.
FIG. 14 is a cross-sectional view along the arrow G of FIG. 13.
FIG. 15 is an exploded perspective view showing a panel structure according to a second embodiment of the present disclosure.
FIG. 16 is a cross-sectional view along the arrow H of FIG. 15.
FIG. 17 is a cross-sectional view for illustrating a structure of a cross-section of a panel structure according to a first modification example of the second embodiment perpendicular to a longitudinal direction of a protrusion portion.
FIG. 18 is an exploded perspective view showing a panel structure according to a second modification example of the second embodiment.
FIG. 19 is a cross-sectional view along the arrow I of FIG. 18.
FIG. 20 is a cross-sectional view of a panel structure according to a third modification example of the second embodiment.
FIG. 21 is a schematic view of a vehicle for illustrating application examples of the panel structure.

### [Embodiments of the Invention]

### (First Embodiment)

Hereinafter, a vehicle panel structure 100 according to a first embodiment of the present disclosure (hereinafter, simply referred to as the panel structure 100) will be described.

In the present specification and the drawings, constituent elements having substantially the same functional configuration may be designated by the same reference numerals, and their duplicate description may be omitted. In the drawings, the arrow Fr represents a vehicle forward direction.

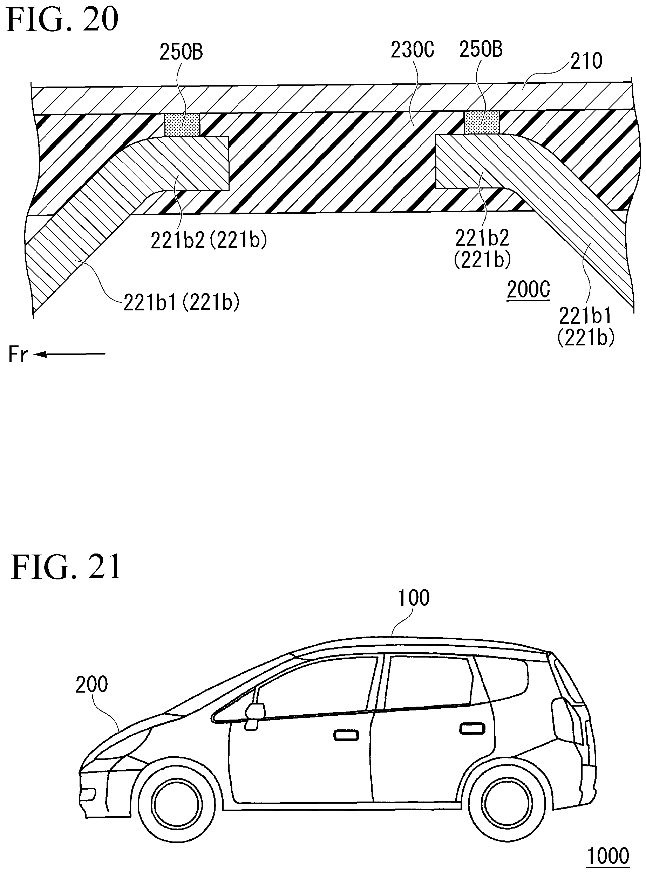

The panel structure 100 according to the present embodiment is applied to a roof of a vehicle 1000 shown in FIG. 21.

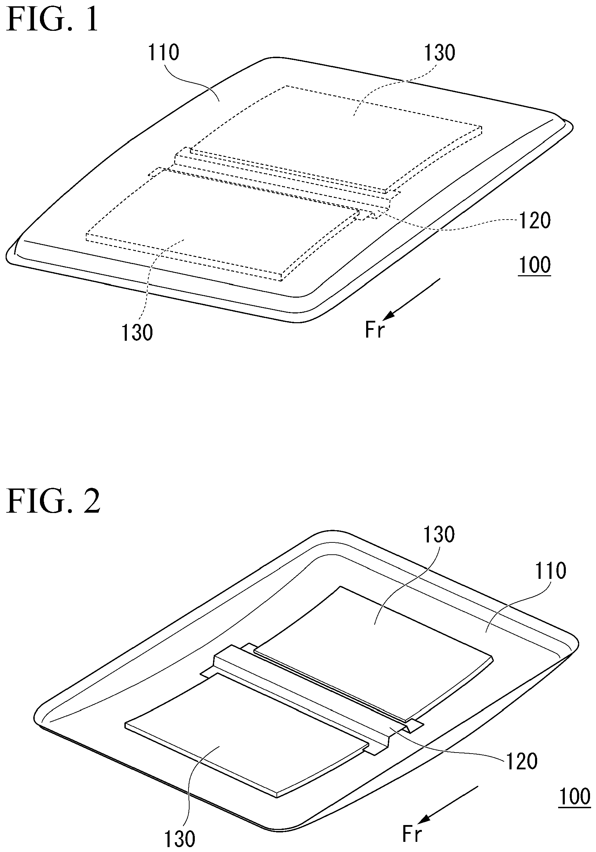

FIG. 1 is a perspective view showing the panel structure 100 as viewed from the outside of the vehicle, and FIG. 2 is a perspective view showing the panel structure 100 as viewed from the inside of the vehicle.

As shown in FIGS. 1 and 2, the panel structure 100 has an outer panel member 110, an inner member 120 disposed to face an inner surface of the outer panel member 110, and a resin member 130 joined to the inner surface of the outer panel member 110.

### (Outer Panel Member 110)

The outer panel member 110 is a sheet-like member having a curved surface protruding toward the outside of the vehicle. In the present disclosure, the surface on the outside of the vehicle may be referred to as the outer surface, and the surface on the inside of the vehicle may be referred to as the inner surface.

The outer panel member 110 is formed by press-forming a metal sheet such as a steel sheet.

The tensile strength of the outer panel member 110 is preferably 440 MPa or greater, and more preferably 590 MPa or greater from the viewpoint of dent resistance.

The sheet thickness of the outer panel member 110 is preferably 0.55 mm or less, and more preferably 0.50 mm or less from the viewpoint of weight reduction.

In a case where the sheet thickness of the outer panel member 110 is excessively small, the panel rigidity is noticeably reduced. Further, in a case where the sheet thickness of the outer panel member 110 is excessively small, the outer panel member 110 is likely to resonate with high-frequency vibrations. Therefore, for example, in a case where the outer panel member 110 is applied to a roof of a vehicle, sounds such as vibration sounds due to raindrops from above or wind noise during traveling are likely to intrude into the vehicle, and the quietness may be noticeably reduced. Therefore, in order to reliably exhibit excellent panel rigidity and quietness, the sheet thickness of the outer panel member 110 is preferably 0.30 mm or greater, and more preferably 0.35 mm or greater. According to the panel structure 100 of the present embodiment, the panel rigidity of the outer panel member 110 can be increased by a configuration to be described later. Therefore, it is possible to exhibit excellent panel rigidity while reducing the sheet thickness of the outer panel member 110.

### (Inner Member 120)

The inner member 120 is a long member disposed to face an inner surface of the outer panel member 110. The inner member 120 is disposed so as to extend along one direction in an in-plane direction of the outer panel member 110. The inner member 120 functions to reinforce the panel structure 100 by being attached to the outer panel member 110 in such a manner that a longitudinal direction of the inner member 120 coincides with a width direction of the vehicle.

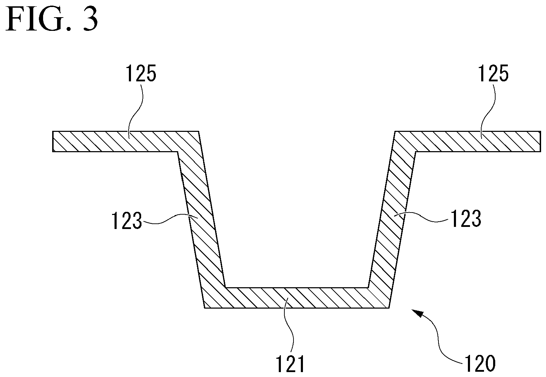

FIG. 3 is a cross-sectional view showing a cross-section of the inner member 120 perpendicular to the longitudinal direction. As shown in FIG. 3, the inner member 120 has a substantially hat-like cross-section portion including: a top sheet portion 121; a pair of side wall portions 123, 123 bending and extending from both end portions of the top sheet portion 121; and a pair of flange portions 125, 125 bending and extending outward from end portions of the pair of side wall portions 123, 123 on the opposite side to the top sheet portion 121.

In the present disclosure, the width direction of the inner member 120 means a direction parallel to the top sheet portion 121 among directions perpendicular to the longitudinal direction of the inner member 120.

The inner member 120 can be obtained by, for example, press-forming a metal sheet such as a steel sheet.

### (Resin Member 130)

As shown in FIGS. 1 and 2, the pair of resin members 130, 130 are joined to the inner surface of the outer panel member 110 so as to bury part of the inner member 120.

In the present disclosure, the expression "at least part of the inner member is buried in the resin member" means that at least part of the inner member is entered into the resin member and is held in a state of being in surface contact with the resin member.

A maximum-thickness part having the maximum length in a direction perpendicular to the in-plane direction of the outer panel member 110 of the resin member 130 is preferably 3 mm or greater and 60 mm or less in thickness.

In a case where the thickness of the maximum-thickness part of the resin member 130 is 3 mm or greater, the inner member 120 can be held more firmly. Accordingly, since it is possible to compensate for the lack of rigidity associated with the thinning of the outer panel member 110, the thickness of the maximum-thickness part of the resin member 130 is preferably 3 mm or greater. The thickness of the maximum-thickness part of the resin member 130 is more preferably 5 mm or greater.

The effect is saturated even in a case where the thickness of the maximum-thickness part of the resin member 130 is greater than 60 mm. Therefore, the thickness of the maximum-thickness part of the resin member 130 is preferably 60 mm or less. The thickness of the maximum-thickness part of the resin member 130 is more preferably 10 mm or less from the viewpoint of weight reduction.

The material of the resin member 130 may be a resin, and any of a thermosetting resin and a thermoplastic resin can be used for the resin member 130.

Examples of the thermosetting resin include epoxy resins, unsaturated polyester resins, and vinyl ester resins.

Examples of the thermoplastic resin include polyolefins (polyethylene, polypropylene, and the like) and acid-modified products thereof, polyamide resins such as nylon 6 and nylon 66, thermoplastic aromatic polyesters such as polyethylene terephthalate and polybutylene terephthalate, polycarbonates, polyether sulfones, polyphenylene ethers and modified products thereof, polyarylates, polyether ketones, polyether ether ketones, polyether ketone ketones, vinyl chlorides, styrene-based resins such as polystyrene, and phenoxy resins.

The resin may be formed of a plurality of kinds of resin materials.

In addition, in a case where the resin material for forming the resin member 130 contains a foaming agent, the work efficiency during attachment of the resin member 130 is improved. Therefore, the resin material for forming the resin member 130 preferably contains a foaming agent.

Examples of the foaming agent include N,N'-dinitrosopentamethylenetetramine, azodicarbonamide, 4,4' -oxybis(benzenesulfonyl hydrazide), hydrogencarbonate, and sodium hydrogen carbonate.

In a case where the resin material contains a foaming agent, the amount of the foaming agent is preferably adjusted so that the expansion ratio is 5 times or greater and 50 times or less. In a case where the expansion ratio is 5 times or greater, the flange portion 125 of the inner member 120 can be more reliably buried in the resin member 130. Therefore, it is possible to reliably exhibit the panel rigidity improvement effect. In addition, in a case where the expansion ratio is 5 times or greater, the vibration is likely to be damped, and thus the quietness improvement effect can be further increased. The expansion ratio is more preferably 10 times or greater from the viewpoint of compensating for the lack of rigidity while reducing the weight. In a case where the expansion ratio is 50 times or less, it is possible to prevent the density of the resin member 130 from being excessively reduced. Therefore, it is possible to reliably exhibit the panel rigidity improvement effect. In addition, in a case where the expansion ratio is 50 times or less, it is possible to prevent the density of the resin member 130 from being excessively reduced, and thus it is possible to enhance the vibration characteristics and further increase the quietness improvement effect. The expansion ratio is more preferably 20 times or less.

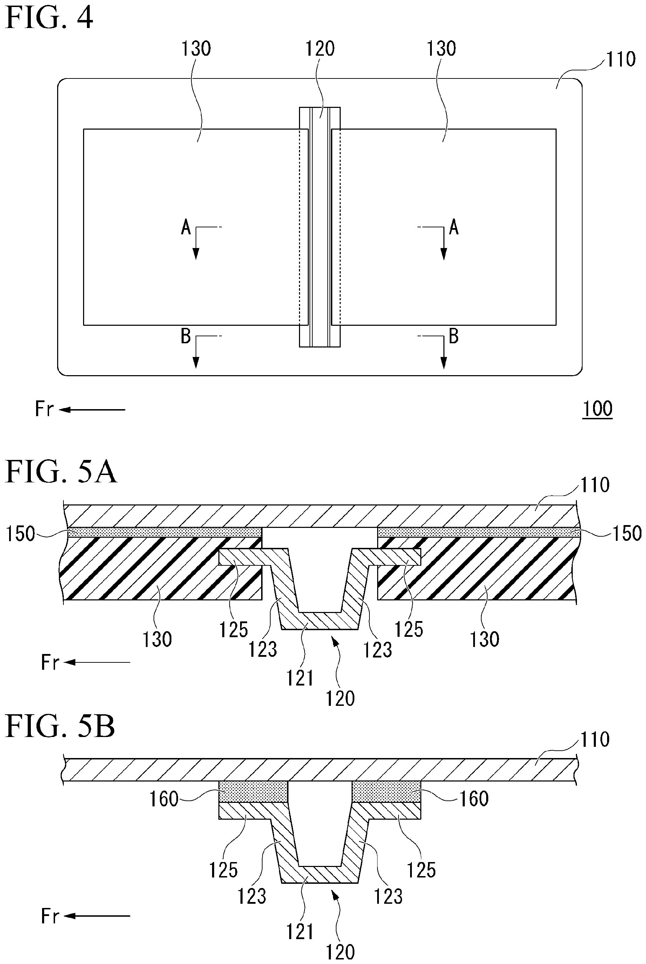

Hereinafter, the positional relationship between the outer panel member 110, the inner member 120, and the resin member 130 will be described with reference to FIGS. 4 and 5.

FIG. 4 is a schematic view for illustrating the positional relationship between the members in a state in which the panel structure 100 is viewed from the inside of the vehicle. As shown in FIG. 4, the pair of resin members 130, 130 are disposed so as to bury part of the inner member 120 in the longitudinal center of the inner member 120.

FIG. 5(a) is a cross-sectional view along the arrow A of FIG. 4. That is, FIG. 5(a) shows a cross-section portion in the longitudinal center of the inner member 120, in the cross-section portion of the panel structure 100 perpendicular to the longitudinal direction of the inner member 120.

As shown in FIG. 5(a), in the longitudinal center of the inner member 120, width-directional end portions of the pair of flange portions 125, 125 of the inner member 120 are entered into the pair of resin members 130, 130 from side surfaces of the pair of resin members 130, 130. That is, part of the inner member 120 is buried in the resin member 130.

Furthermore, upper surfaces of the pair of resin members 130, 130 are joined to the inner surface of the outer panel member 110 via an adhesion portion 150.

The adhesion portion 150 may be an adhesive. In a case where a mastic adhesive primarily containing synthetic rubber is used as the material of the adhesion portion 150, the panel rigidity of the outer panel member 110 can be further increased. In addition, in a case where a mastic adhesive primarily containing synthetic rubber is used as the material of the adhesion portion 150, it is possible to impart vibration characteristics in which high-frequency vibrations are likely to be damped, and thus the quietness of the outer panel member 110 can be further increased. Therefore, as the material of the adhesion portion 150, a mastic adhesive primarily containing synthetic rubber is preferably used.

The adhesion portion 150 may be provided on only part or all of the upper surface of the resin member 130.

In a case where the resin material for forming the resin member 130 contains a foaming agent, the resin member 130 can be formed by spray-coating a resin material containing the foaming agent on the outer panel member 110 and/or the inner member 120 and foaming the resin material by heating. In this case, since the upper surface of the resin member 130 is directly joined to the outer panel member 110, the adhesion portion 150 can be omitted.

FIG. 5(b) is a cross-sectional view along the arrow B of FIG. 4. That is, FIG. 5(b) shows a cross-section portion on a longitudinal end portion side of the inner member 120, in the cross-section portion of the panel structure 100 perpendicular to the longitudinal direction of the inner member 120.

As shown in FIG. 5(b), on the longitudinal end portion side of the inner member 120, the pair of resin members 130, 130 are not disposed, and the pair of flange portions 125, 125 of the inner member 120 are joined to the outer panel member 110 via an adhesion portion 160.

The adhesion portion 160 may be an adhesive. In a case where a mastic adhesive primarily containing synthetic rubber is used as the material of the adhesion portion 160, the panel rigidity of the outer panel member 110 can be further increased. In addition, in a case where a mastic adhesive primarily containing synthetic rubber is used as the material of the adhesion portion 160, it is possible to impart vibration characteristics in which high-frequency vibrations are likely to be damped, and thus the quietness of the outer panel member 110 can be further increased. Therefore, as the material of the adhesion portion 160, a mastic adhesive primarily containing synthetic rubber is preferably used.

The adhesion portion 160 is provided only on the longitudinal end portion side of the inner member 120 but may also be provided in the longitudinal center portion. In a case where the adhesion portion 160 is also provided in the longitudinal center portion of the inner member 120, the adhesion portion 160 may be continuously provided along the longitudinal direction of the inner member 120, or intermittently provided at predetermined pitches along the longitudinal direction of the inner member 120.

The adhesion portion 150 joining the outer panel member 110 and the resin member 130 and the adhesion portion 160 joining the outer panel member 110 and the inner member 120 are preferably the same material from the viewpoint of improving the work efficiency during attachment of the inner member 120 and the resin member 130 to the outer panel member 110.

As a method of obtaining the panel structure 100, any of
· a pattern A in which assembling is performed after formation of a resin member, and
· a pattern B in which assembling is performed before formation of a resin member
can be employed. The details thereof will be described below.

### (Pattern A)

In a first step A11, a molding die is installed so as to surround a predetermined part of the inner member 120, and a resin material is injected into the molding die and hardened to integrate the inner member 120 with the pair of resin members 130, 130.

In a second step A12, the inner member 120 and the pair of resin members 130, 130 integrated with each other are attached to the outer panel member 110 with an adhesive or the like.

As the resin material used in the first step A11, either of a thermoplastic resin and a thermosetting resin can be employed. In addition, the resin material may contain a foaming agent.

In the first step A11, the resin material may be previously injected into the molding die and hardened to mold intermediate products of the pair of resin members 130, 130, the intermediate products may be subjected to slit working, and the flange portion 125 of the inner member 120 may be inserted into a slit to achieve the integration.

### (Pattern B)

In a first step B11, a resin material containing a foaming agent is spray-coated on the outer panel member 110 and/or the inner member 120.

In a second step B12, the pair of flange portions 125, 125 of the inner member 120 are attached to the outer panel member 110 with an adhesive or the like.

In a third step B13, the resin material is foamed to form the resin members 130 in a state of burying the pair of flange portions 125, 125 of the inner member 120.

A thermosetting resin is used as the resin material to be spray-coated in the first step B11.

The order of the first step B11 and the second step B12 may be reversed.

In the third step B13, the amount of the foaming agent is preferably adjusted so that the expansion ratio is 5 times or greater and 50 times or less. In a case where the expansion ratio is 5 times or greater, the flange portion 125 of the inner member 120 can be more reliably buried in the resin member 130. Therefore, it is possible to reliably exhibit the panel rigidity improvement effect. In addition, in a case where the expansion ratio is 5 times or greater, the vibration is likely to be damped, and thus the quietness improvement effect can be further increased. In a case where the expansion ratio is 50 times or less, it is possible to prevent the density of the resin member 130 from being excessively reduced. Therefore, it is possible to reliably exhibit the panel rigidity improvement effect. In addition, in a case where the expansion ratio is 50 times or less, it is possible to prevent the density of the resin member 130 from being excessively reduced, and thus it is possible to enhance the vibration characteristics and further increase the quietness improvement effect.

In the third step B 13, the resin material may be foamed using the heat during electrodeposition coating.

According to the above-described panel structure 100, part of the inner member 120 is buried in the pair of resin members 130, 130. Therefore, the pair of resin members 130, 130 are joined to the inner surface of the outer panel member 110 in a state of being firmly held by the inner member 120.

Therefore, the panel rigidity of the outer panel member 110 can be improved compared to a case where the resin member 130 is simply disposed between the outer panel member 110 and the inner member 120. Since the panel rigidity can be improved in this way, it is possible to prevent a reduction in panel rigidity that is noticeable in a case where the thickness of the outer panel member 110 is reduced for weight reduction.

Therefore, according to the above-described panel structure 100, it is possible to exhibit excellent panel rigidity while achieving lightweight properties.

In addition, as described above, in an outer panel of a roof of a vehicle in the related art, in a case where the outer panel is thin, sounds such as vibration sounds due to raindrops from above or wind noise during traveling are likely to intrude into the vehicle, and thus there is a noticeable lack of quietness.

However, according to the above-described roof panel structure 100, part of the inner member 120 is buried in the pair of resin members 130, 130. Therefore, the pair of resin members 130, 130 are joined to the inner surface of the outer panel member 110 in a state of being firmly held by the inner member 120. Accordingly, compared to a case where the resin member 130 is simply disposed between the outer panel member 110 and the inner member 120, it is possible to further enhance the vibration characteristics so that high-frequency vibrations are easily damped, whereby the vibration characteristics of the outer panel member 110 can be enhanced, and the quietness can be improved.

Since the quietness can be improved in this way, it is possible to prevent a reduction in quietness that is noticeable in a case where the thickness of the outer panel member 110 is reduced for weight reduction.

Therefore, according to the above-described roof panel structure 100, it can exhibit excellent quietness while being lightweight.

Hereinafter, modification examples of the panel structure 100 described in the first embodiment will be described. Substantially the same members as those in the panel structure 100 are denoted using the same reference numerals, and description thereof will be omitted.

### (First Modification Example)

The panel structure 100 according to the first embodiment described above is configured to have the pair of resin members 130. However, a panel structure 100A according to a first modification example is configured to have a single resin member 130A.

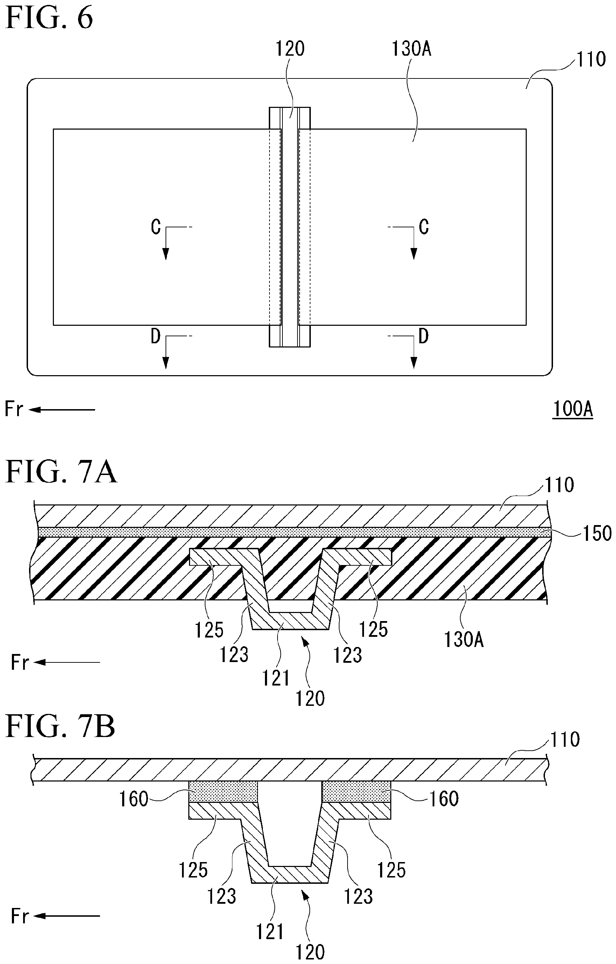

FIG. 6 is a schematic view for illustrating the positional relationship between the members in a state in which the panel structure 100A according to the first modification example is viewed from the inside of a vehicle. FIG. 7(a) is a cross-sectional view along the arrow C of FIG. 6, and FIG. 7(b) is a cross-sectional view along the arrow D of FIG. 6.

In the panel structure 100A, a pair of flange portions 125, 125 and part of a pair of side wall portions 123 of an inner member 120 are buried in the single resin member 130A. According to the panel structure 100A, a wider part of the inner member 120 can be held by the resin member 130A. Furthermore, since the resin member 130A is also present in a region between the pair of flange portions 125, 125, a wide part of an outer panel member 110 can be joined to the resin member 130A.

Therefore, the panel rigidity of the outer panel member 110 can be further increased. In addition, the vibration characteristics of the outer panel member 110 can be enhanced, and the quietness can be further increased.

The single resin member 130A may be configured by connecting a plurality of resin members divided.

### (Second Modification Example)

Furthermore, a cross-section portion in which an inner member 120 is entirely buried by a single resin member 130B may be provided as in a panel structure 100B according to a second modification example.

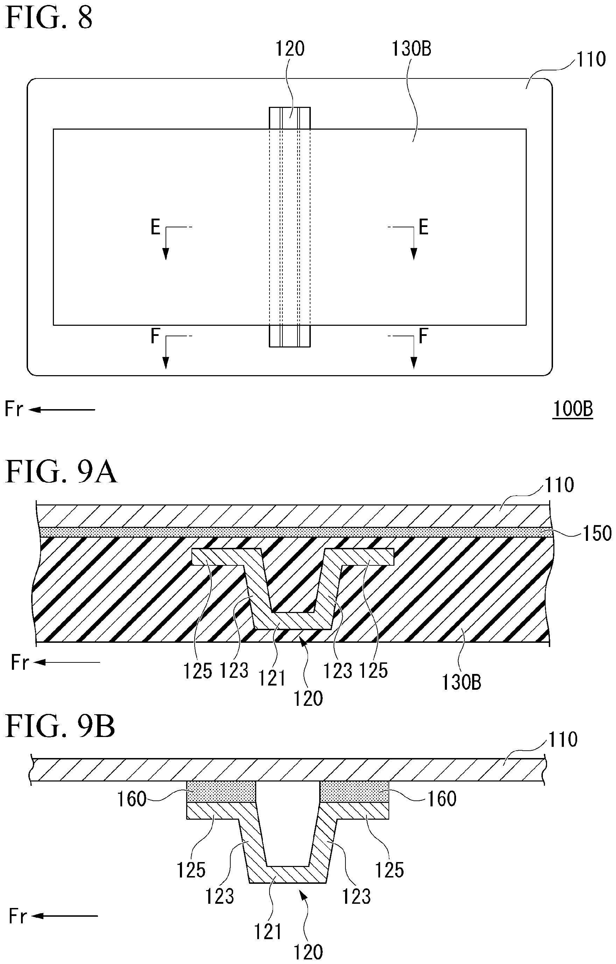

FIG. 8 is a schematic view for illustrating the positional relationship between the members in a state in which the panel structure 100B according to the second modification example is viewed from the inside of a vehicle. FIG. 9(a) is a cross-sectional view along the arrow E of FIG. 8, and FIG. 9(b) is a cross-sectional view along the arrow F of FIG. 8.

In the panel structure 100B, as shown in FIG. 9(a), in a cross-section portion in the longitudinal center of the inner member 120, the entire inner member 120 (that is, top sheet portion 121, a pair of side wall portions 123, 123, and a pair of flange portions 125, 125) is buried by the single resin member 130B.

According to the panel structure 100B, since the cross-section portion in which the inner member 120 is entirely buried in the single resin member 130B is provided, a wider part of the inner member 120 can be held by the resin member 130B. Furthermore, since the resin member 130B is also present in a region between the pair of flange portions 125, 125, a wide part of an outer panel member 110 can be joined to the resin member 130B.

Therefore, the panel rigidity of the outer panel member 110 can be further increased. In addition, the vibration characteristics of the outer panel member 110 can be enhanced, and the quietness can be further increased.

The single resin member 130B may be configured by connecting a plurality of resin members divided.

As a method of obtaining the panel structure 100A according to the first modification example or the panel structure 100B according to the second modification example, any of
· a pattern A in which assembling is performed after formation of a resin member, and
· a pattern B in which assembling is performed before formation of a resin member
can be employed as in the method of obtaining the panel structure 100.

In the pattern B, in a case where the order of the first step B11 and the second step B12 is reversed (that is, in a case where a resin material containing a foaming agent is spray-coated after attachment of the inner member 120 to the outer panel member 110 with an adhesive or the like), the spray-coating may be performed from a gap between the flange portion 125 and the outer panel member 110. However, in a case where the gap is narrow, holes for spray-coating may be formed in the top sheet portion 121 or the side wall portion 123 of the inner member 120.

### (Third Modification Example)

The panel structure 100 according to the first embodiment described above is configured to have a single inner member 120 but may be configured to have a plurality of inner members 120.

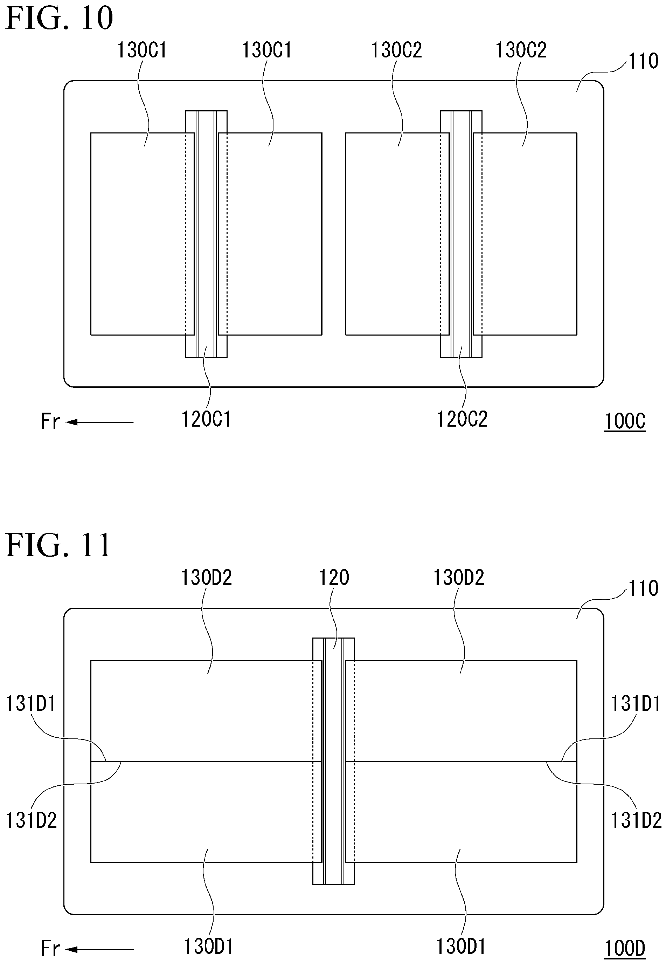

FIG. 10 is a schematic view for illustrating the positional relationship between the members in a state in which a panel structure 100C according to a third modification example is viewed from the inside of a vehicle.

In the panel structure 100C, a first inner member 120C1 and a second inner member 120C2 are disposed so as to be separated from each other in a longitudinal direction of the vehicle. More specifically, the first inner member 120C 1 and the second inner member 120C2 are disposed in such a manner that a longitudinal direction of the first inner member 120C1 and a longitudinal direction of the second inner member 120C2 are parallel to each other.

The first inner member 120C1 and the second inner member 120C2 are provided with a pair of first resin members 130C1, 130C1 and a pair of second resin members 130C2, 130C2 burying a pair of flange portions 125, 125.

Since the first inner member 120C1 and the second inner member 120C2 have the same configuration as the inner member 120, and the first resin member 130C1 and the second resin member 130C2 have the same configuration as the resin member 130, description thereof will be omitted.

According to the panel structure 100C of the third modification example, it is possible to increase the panel rigidity in a desired part even in a case where the outer panel member 110 has large lengths. In addition, according to the roof panel structure 100C of the third modification example, it is possible to enhance the vibration characteristics and increase the quietness even in a case where the outer panel member 110 has large lengths.

Depending on the shape and lengths of the outer panel member 110, three or more inner members 120 may be provided, or a plurality of inner members 120 may be provided so that their longitudinal directions intersect each other.

In addition, in the example shown in FIG. 10, the first resin member 130C1 and the second resin member 130C2 are disposed to be separated from each other around the center in the longitudinal direction of the vehicle but may be integrated with each other. That is, a configuration in which at least part of each of the pair of inner members 120 adjacent to each other in the longitudinal direction of the vehicle is buried in a single (common) resin member 130 may be adopted.

### (Fourth Modification Example)

In the panel structure 100 according to the first embodiment described above, each of the pair of resin members 130, 130 is composed of a single member, but each resin member 130 may have a configuration in which a plurality of members divided are connected along the in-plane direction of the outer panel member 110.

FIG. 11 is a schematic view for illustrating the positional relationship between the members in a state in which a panel structure 100D according to a fourth modification example is viewed from the inside of a vehicle. The panel structure 100D has a first resin member 130D1 and a second resin member 130D2 which are two members divided in a longitudinal direction (width direction of vehicle) of an inner member 120 in the in-plane direction of the outer panel member 110. The first resin member 130D1 and the second resin member 130D2 are connected by joining an end surface 131D1 of the first resin member 130D1 and an end surface 131D2 of the second resin member 130D2 with an adhesive.

Since the first resin member 130D1 and the second resin member 130D2 have the same configuration as the resin member 130, description thereof will be omitted.

According to the panel structure 100D of the fourth modification example, it is possible to increase the panel rigidity in a desired part even in a case where the outer panel member 110 has large lengths. In addition, according to the roof panel structure 100D of the fourth modification example, it is possible to enhance the vibration characteristics and increase the quietness even in a case where the outer panel member 110 has large lengths.

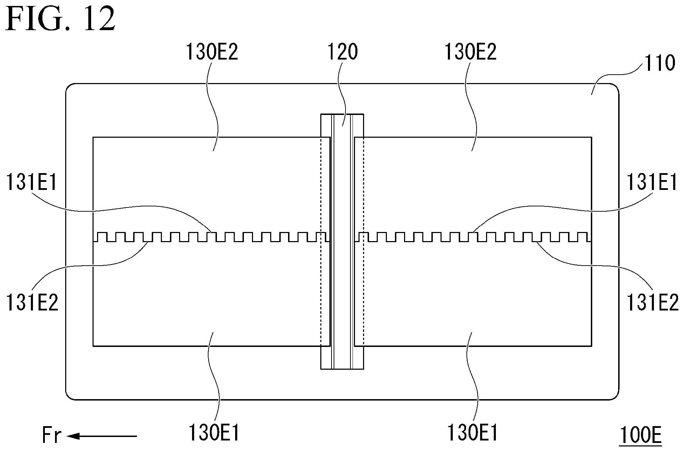

Furthermore, FIG. 12 is a schematic view for illustrating the positional relationship between the members in a state in which a panel structure 100E according to a fifth modification example is viewed from the inside of a vehicle. The panel structure 100E has a first resin member 130E1 and a second resin member 130E2 which are two members divided in a longitudinal direction (width direction of vehicle) of an inner member 120 in the in-plane direction of the outer panel member 110. The first resin member 130E1 and the second resin member 130E2 are connected to each other by engaging an end surface 131E1 of the first resin member 130E1 and an end surface 131E2 of the second resin member 130E2 with each other. Specifically, in the first resin member 130E1 and the second resin member 130E2, each of the end surface 131E1 and the end surface 131E2 facing each other has convex portions and concave portions alternately, and the first resin member 130E1 and the second resin member 130E2 are connected by engaging the convex portions and the concave portions of the end surface 131E1 with the concave portions and the convex portions of the end surface 131E2.

Since the first resin member 130E1 and the second resin member 130E2 have the same configuration as the resin member 130, duplicate description will be omitted.

According to the panel structure 100D of the fifth modification example, it is possible to increase the panel rigidity in a desired part even in a case where the outer panel member 110 has large lengths. In addition, according to the roof panel structure 100D of the fifth modification example, it is possible to enhance the vibration characteristics and increase the quietness even in a case where the outer panel member 110 has large lengths. In addition, in the panel structure 100D according to the fifth modification example, it is not essential to join the end surfaces with an adhesive as in the panel structure 100 according to the fourth modification example, whereby the workability during attachment is improved. However, in a case where the engaging parts between the convex portions and the concave portions are joined with an adhesive, it is possible to more reliably prevent the first resin member 130E1 and the second resin member 130E2 from falling off. Therefore, the engaging parts between the convex portions and the concave portions are preferably joined with an adhesive.

### (Sixth Modification Example)

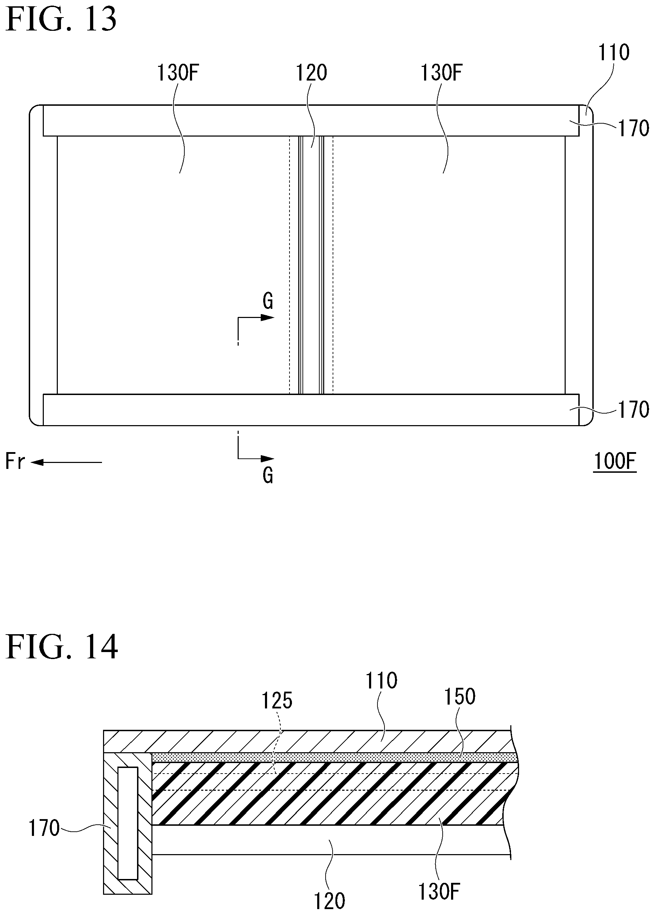

FIG. 13 is a schematic view showing the positional relationship between the members in a panel structure 100F according to a sixth modification example. FIG. 14 is a cross-sectional view along the arrow G of FIG. 13.

In the panel structure 100F, a pair of side frames 170, 170 are provided near end edges of an outer panel member 110 in a width direction of a vehicle so as to extend in a longitudinal direction of the vehicle.

The side frame 170 may be, for example, a hollow long member formed of a metal sheet such as a steel sheet.

In the panel structure 100F, both end portions of an inner member 120 in a longitudinal direction are fixed to the pair of side frames 170, 170 by welding or the like.

Furthermore, both the end portions of the inner member 120 in the longitudinal direction are buried in resin members 130F as shown in FIG. 14.

According to this embodiment, a pair of the resin members 130F, 130F are joined to an inner surface of the outer panel member 110 in a state of being firmly held by the inner member 120, both the end portions of which are fixed to the pair of side frames 170, 170. Therefore, the vibration characteristics of the outer panel member 110 can be enhanced, and the quietness can be further improved.

### (Other Modification Examples)

It is possible to employ various modification examples other than the examples described above.

For example, a member having a hat-like cross-section is used as the inner member 120, but the inner member 120 may be a member having a U-shaped cross-section or a member having a T-shaped cross-section.

In addition, the resin member 130 is provided only in part of the inner member 120 in the longitudinal direction, but the resin member 130 may be provided over the whole length of the inner member 120 in the longitudinal direction. For example, by spray-coating a resin material on the entire inner member 120, the resin member 130 can be provided so as to completely surround and bury the inner member 120.

### (Second Embodiment)

Hereinafter, a vehicle panel structure 200 according to a second embodiment of the present disclosure (hereinafter, simply referred to as the panel structure 200) will be described.

The panel structure 200 according to the present embodiment is a panel structure applied to a hood of a vehicle 1000 shown in FIG. 21.

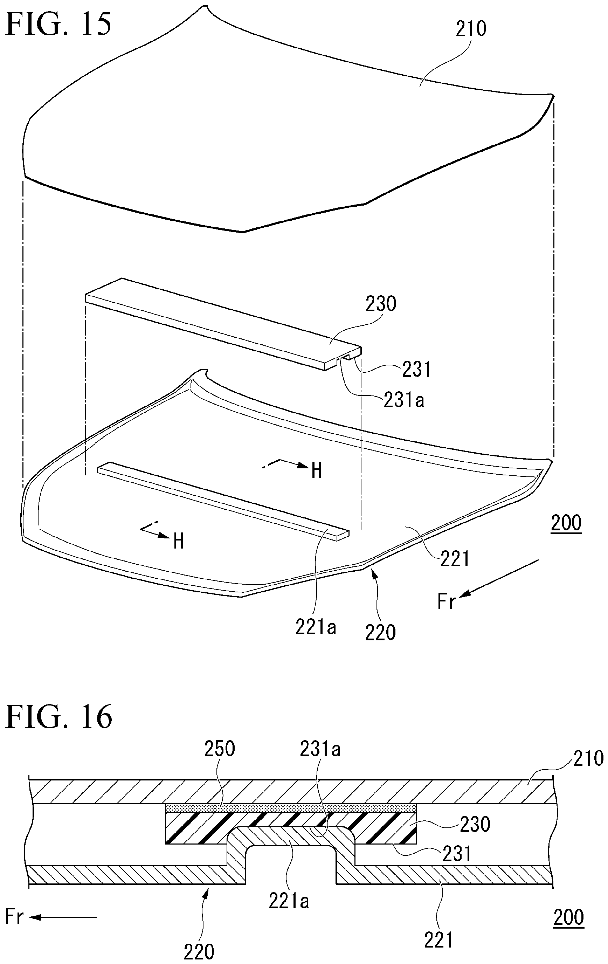

FIG. 15 is an exploded perspective view of the panel structure 200.

As shown in FIG. 15, the panel structure 200 has an outer panel member 210, an inner member 220 disposed to face an inner surface of the outer panel member 210, and a resin member 230 joined to the inner surface of the outer panel member 210.

### (Outer Panel Member 210)

The outer panel member 210 is a sheet-like member having a curved surface protruding toward the outside of the vehicle. In the present disclosure, the surface on the outside of the vehicle may be referred to as the outer surface, and the surface on the inside of the vehicle may be referred to as the inner surface.

The outer panel member 210 is formed by press-forming a metal sheet such as a steel sheet.

The tensile strength of the outer panel member 210 is preferably 440 MPa or greater, and more preferably 590 MPa or greater from the viewpoint of dent resistance.

The sheet thickness of the outer panel member 210 is preferably 0.55 mm or less, and more preferably 0.50 mm or less from the viewpoint of weight reduction.

In a case where the sheet thickness of the outer panel member 210 is excessively small, the panel rigidity is noticeably reduced. Therefore, in order to reliably exhibit excellent panel rigidity, the sheet thickness of the outer panel member 210 is preferably 0.30 mm or greater, and more preferably 0.35 mm or greater. According to the panel structure 200 of the present embodiment, the panel rigidity of the outer panel member 210 can be increased by a configuration to be described later. Therefore, it is possible to exhibit excellent panel rigidity while reducing the sheet thickness of the outer panel member 210.

### (Inner Member 220)

The inner member 220 is composed of a sheet-like main body portion 221 disposed to face the inner surface of the outer panel member 210.

The main body portion 221 has a protrusion portion 221a protruding toward the outer panel member 210 in the center of the main body portion 221 in an in-plane direction.

In the panel structure 200, the protrusion portion 221a functions to reinforce the panel structure 200 by being formed on the inner member 220 in such a manner that a longitudinal direction of the protrusion portion 221a coincides with a width direction of the vehicle.

The protrusion portion 221a may be formed on the inner member 220 in such a manner that the longitudinal direction of the protrusion portion 221a intersects with the width direction of the vehicle when viewed from a direction perpendicular to the in-plane direction of the outer panel member 210. In addition, the protrusion portion 221a may have a circular, elliptical, or polygonal shape when viewed from the direction perpendicular to the in-plane direction of the outer panel member 210.

The inner member 220 can be obtained by, for example, press-forming a metal sheet such as a steel sheet.

### (Resin Member 230)

As shown in FIG. 15, the resin member 230 has a bottom surface 231 facing the main body portion 221 of the inner member 220. A groove 231a having a shape corresponding to the protrusion portion 221a is formed on the bottom surface 231. The resin member 230 is joined to the inner surface of the outer panel member 210 so as to bury a tip end of the protrusion portion 221a on the side of the outer panel member 210.

Of the resin member 230, a maximum-thickness part having the maximum length in a direction perpendicular to the in-plane direction of the outer panel member 210 is preferably 3 mm or greater and 60 mm or less in thickness.

In a case where the thickness of the maximum-thickness part of the resin member 230 is 3 mm or greater, the inner member 220 can be held more firmly. Accordingly, since it is possible to compensate for the lack of rigidity associated with the thinning of the outer panel member 210, the thickness of the maximum-thickness part of the resin member 230 is preferably 3 mm or greater.

The effect is saturated even in a case where the thickness of the maximum-thickness part of the resin member 230 is greater than 60 mm. Therefore, the thickness of the maximum-thickness part of the resin member 230 is preferably 60 mm or less.

The material of the resin member 230 may be a resin, and any of a thermosetting resin and a thermoplastic resin can be used as the material of the resin member 230.

Examples of the thermosetting resin include epoxy resins, unsaturated polyester resins, and vinyl ester resins.

Examples of the thermoplastic resin include polyolefins (polyethylene, polypropylene, and the like) and acid-modified products thereof, polyamide resins such as nylon 6 and nylon 66, thermoplastic aromatic polyesters such as polyethylene terephthalate and polybutylene terephthalate, polycarbonates, polyether sulfones, polyphenylene ethers and modified products thereof, polyarylates, polyether ketones, polyether ether ketones, polyether ketone ketones, vinyl chlorides, styrene-based resins such as polystyrene, and phenoxy resins.

The resin may be formed of a plurality of kinds of resin materials.

In addition, in a case where the resin material for forming the resin member 230 contains a foaming agent, the work efficiency during attachment of the resin member 230 is improved. Therefore, the resin material for forming the resin member 230 preferably contains a foaming agent.

Examples of the foaming agent include N,N'-dinitrosopentamethylenetetramine, azodicarbonamide, 4,4' -oxybis(benzenesulfonyl hydrazide), hydrogencarbonate, and sodium hydrogen carbonate.

In a case where the resin material contains a foaming agent, the amount of the foaming agent is preferably adjusted so that the expansion ratio is 5 times or greater and 50 times or less.

FIG. 16 is a cross-sectional view along the arrow H of FIG. 15. That is, FIG. 16 shows a cross-section portion in the longitudinal center of the protrusion portion 221a, in the cross-section portion of the panel structure 200 perpendicular to the longitudinal direction of the protrusion portion 221a.

As shown in FIG. 16, in the longitudinal center of the protrusion portion 221a of the inner member 220, a tip end of the protrusion portion 221a of the inner member 220, which is on the side of the outer panel member 210, is entered into the groove 231a of the resin member 230. That is, part of the inner member 220 is buried in the resin member 230.

Furthermore, an upper surface of the resin member 230 is joined to the inner surface of the outer panel member 210 via an adhesion portion 250.

The adhesion portion 250 may be an adhesive. In a case where a mastic adhesive primarily containing synthetic rubber is used as the material of the adhesion portion 250, the panel rigidity of the outer panel member 210 can be further increased. Therefore, as the material of the adhesion portion 250, a mastic adhesive primarily containing synthetic rubber is preferably used.

The adhesion portion 250 may be provided on only part or all of the upper surface of the resin member 230.

In a case where the resin material for forming the resin member 230 contains a foaming agent, the resin member 230 can be formed by spray-coating a resin material containing the foaming agent on the outer panel member 210 and/or the inner member 220 and foaming the resin material by heating. In this case, since the upper surface of the resin member 230 is directly joined to the outer panel member 210, the adhesion portion 250 can be omitted.

As a method of obtaining the panel structure 200, any of
· a pattern A in which assembling is performed after formation of a resin member, and
· a pattern B in which assembling is performed before formation of a resin member
can be employed. The details thereof will be described below.

### (Pattern A)

In a first step A21, a molding die is installed so as to surround a predetermined part of the protrusion portion 221a of the inner member 220, and a resin material is injected into the molding die and hardened to integrate the inner member 220 with the resin member 230.

In a second step A22, the inner member 220 and the resin member 230 integrated with each other are attached to the outer panel member 210 with an adhesive or the like.

As the resin material used in the first step A21, either of a thermoplastic resin and a thermosetting resin can be employed. In addition, the resin material may contain a foaming agent.

In the first step A21, the resin member 230 and the inner member 220 may be integrated with each other by joining the resin member 230 made previously in the molding die to the inner member 220 with an adhesive or the like.

### (Pattern B)

In a first step B21, a resin material containing a foaming agent is spray-coated on the outer panel member 210 and/or the inner member 220.

In a second step B22, the inner member 220 is assembled to the outer panel member 210 with an adhesive or the like.

In a third step B23, the resin material is foamed to form the resin member 230 in a state of burying the tip end of the protrusion portion 221a of the inner member 220.

A thermosetting resin is used as the resin material to be spray-coated in the first step B21.

The order of the first step B21 and the second step B22 may be reversed. However, it is necessary to take measures such as forming a hole for spray-coating holes on the inner member 220.

In the third step B23, the heating is preferably performed so that the expansion ratio is 5 times or greater and 50 times or less. In a case where the expansion ratio is 5 times or greater, the protrusion portion 221a of the inner member 220 can be more reliably buried in the resin member 230. Therefore, it is possible to reliably exhibit the panel rigidity improvement effect. The expansion ratio is more preferably 10 times or greater from the viewpoint of compensating for the lack of rigidity while reducing the weight. In a case where the expansion ratio is 50 times or less, it is possible to prevent the density of the resin member 230 from being excessively reduced, and thus it is possible to reliably exhibit the panel rigidity improvement effect. The expansion ratio is more preferably 20 times or less.

In the third step B23, the foaming may be performed using the heat during electrodeposition coating.

According to the above-described panel structure 200, the tip end of the protrusion portion 221a of the inner member 220 is buried in the resin member 230. Therefore, the resin member 230 is joined to the inner surface of the outer panel member 210 in a state of being firmly held by the inner member 220.

Therefore, the panel rigidity of the outer panel member 210 can be improved compared to a case where the resin member 230 is simply disposed between the outer panel member 210 and the inner member 220. Since the panel rigidity can be improved in this way, it is possible to prevent a reduction in panel rigidity that is noticeable in a case where the thickness of the outer panel member 210 is reduced for weight reduction.

Therefore, according to the above-described panel structure 200, it is possible to exhibit excellent panel rigidity while achieving lightweight properties.

Hereinafter, modification examples of the panel structure 200 described in the second embodiment will be described. Substantially the same members as those in the panel structure 200 are denoted using the same reference numerals, and description thereof will be omitted.

### (First Modification Example)

The panel structure 200 according to the second embodiment has a configuration having a cross-section portion in which the tip end of the protrusion portion 221a of the inner member 220 is buried in the resin member 230, but may have a configuration having a cross-section portion in which the surface of the protrusion portion 221a on the side of the outer panel member 210 is entirely buried in the resin member 230.

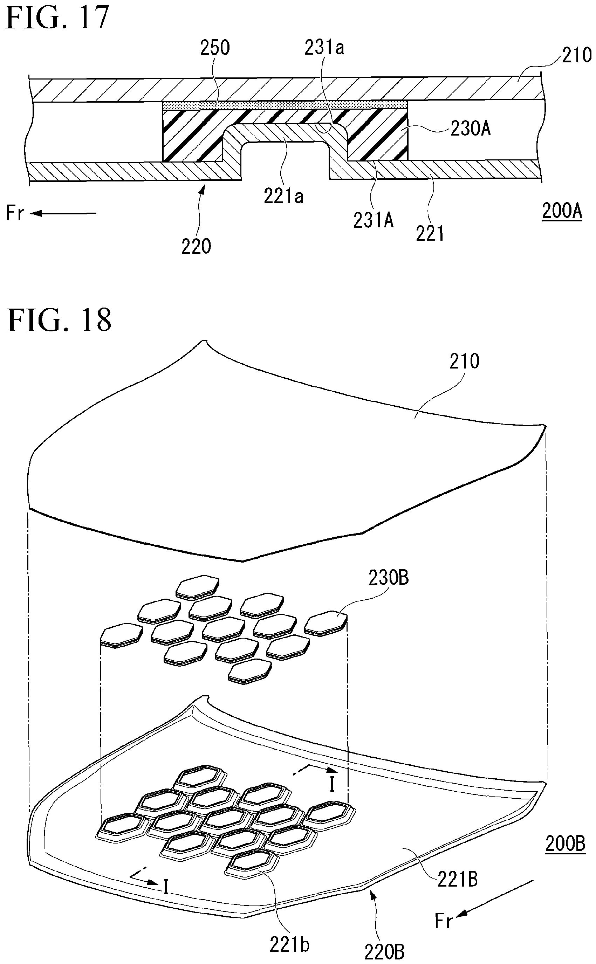

FIG. 17 shows a cross-section portion in the longitudinal center of a protrusion portion 221a, in the cross-section portion of a panel structure 200A according to a first modification example of the second embodiment perpendicular to the longitudinal direction of the protrusion portion 221a. As shown in FIG. 17, in the panel structure 200A, a bottom surface 231A of a resin member 230A is in surface contact with a main body portion 221 (that is, a part excluding the protrusion portion 221a) of the inner member 220. Due to such a configuration, the panel structure 200A has a cross-section portion in which the surface of the protrusion portion 221a of the inner member 220, which is on the side of the outer panel member 210, is entirely buried by the resin member 230A.

According to this configuration, the resin member 230A is joined to the outer panel member 210 in a state in which the resin member 230A is more firmly held by the inner member 220. Therefore, it is possible to further improve the panel rigidity of the outer panel member 210.

### (Second Modification Example)

The panel structure 200 according to the second embodiment has a configuration having a cross-section portion in which the protrusion portion 221a formed on the inner member 220 is buried in the resin member 230 but may have a configuration having a cross-section portion in which the vicinity of an opening portion penetrating the inner member 220 is buried in the resin member 230.

FIG. 18 is an exploded perspective view of a panel structure 200B according to a second modification example of the second embodiment. As shown in FIG. 18, in the panel structure 200B, an inner member 220B is composed of a sheet-like main body portion 221B disposed to face an inner surface of an outer panel member 210. In the center of the main body portion 221B in an in-plane direction, a plurality of projected portions 221b and bottom portions 221c extending continuously from the projected portions 221b are formed. The projected portion 221b is formed so as to stand up toward the outer panel member 210. The bottom portion 221c is disposed continuously from the projected portion 221b on the side of the inner member 220B. A plurality of the projected portions 221b and a plurality of the bottom portions 221c are provided so as to be arranged in the in-plane direction of the main body portion 221B.

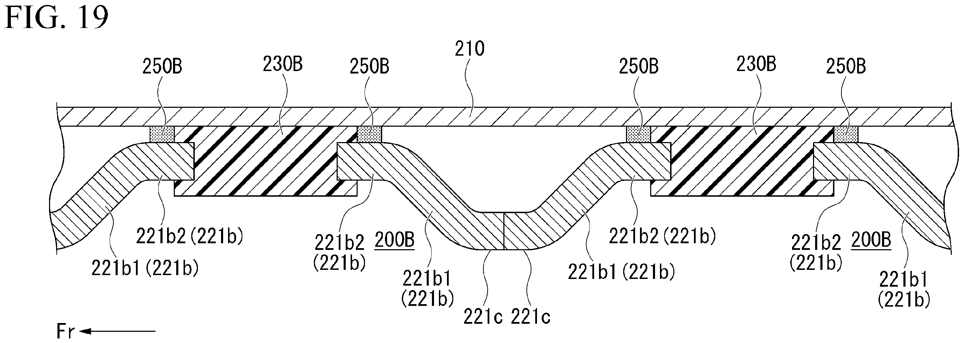

FIG. 19 is a cross-sectional view along the arrow I of FIG. 18. That is, FIG. 19 shows a cross-section portion including the projected portions 221b and the bottom portions 221c, in the cross-section portion of the panel structure 200B perpendicular to one direction (vehicle forward direction Fr) in the in-plane direction of the outer panel member 210.

As shown in FIG. 19, the projected portion 221b has a peripheral wall portion 221b1 and a top portion 221b2.

The peripheral wall portion 221b 1 is a part which is formed so as to stand up toward the outer panel member 210 from the main body portion 221B. The peripheral wall portion 221b 1 is disposed between the top portion 221b2 and the bottom portion 221c and connects the top portion 221b2 and the bottom portion 221c. The peripheral wall portion 221b1 has a substantially hexagonal outer shape as shown in FIG. 18, but may have a polygonal, circular, or elliptical shape.

The top portion 221b2 is a part which is bent and extends from an end edge of the projected portion 221b on the side of the outer panel member 210. An upper surface of the top portion 221b2 is joined to the inner surface of the outer panel member 210 via an adhesion portion 250B.

In the center of the top portion 221b2, a penetration opening portion of a substantially hexagonal shape is formed in a direction perpendicular to the in-plane direction of the outer panel member 210. The opening portion may have a polygonal, circular, or elliptical shape.

In a case where the projected portion 221b has the peripheral wall portion 221b 1 and the top portion 221b2 as described above, a reduction in weight of the inner member 220B can be realized by the opening portion, and the rigidity reduced due to the opening portion can be compensated for by the peripheral wall portion 221b1 formed three-dimensionally.

As shown in FIG. 19, the bottom portion 221c extends continuously from the peripheral wall portion 221b1 and is disposed at a distance from the top portion 221b2. In other words, the bottom portion 221c extends continuously from the peripheral wall portion 221b 1 on the opposite side to the top portion 221b2. In addition, the bottom portion 221c has a substantially hexagonal outer shape as shown in FIG. 18, but may have a polygonal, circular, or elliptical shape.

In addition, as shown in FIG. 19, the bottom portion 221c extending continuously from one top portion 221b2 abuts on the bottom portion 221c extending continuously from another top portion 221b2.

As shown in FIG. 19, the panel structure 200B has a cross-section portion in which part of the top portion 221b2 is buried in a resin member 230B.

According to this structure, it is possible not only to realize a reduction in weight of the entire panel structure 200B, but also to further increase the panel rigidity by burying part of the peripheral wall portion 221b1 in the resin member 230B.

The adhesion portion 250B may be an adhesive. In a case where a mastic adhesive primarily containing synthetic rubber is used as the material of the adhesion portion 250, the panel rigidity of the outer panel member 210 can be further increased. Therefore, as the material of the adhesion portion 250, a mastic adhesive primarily containing synthetic rubber is preferably used.

The adhesion portion 250B may be continuously provided in an annular shape along the upper surface of the top portion 221b2 or may be provided in an annular shape at predetermined pitches.

### (Third Modification Example)

Furthermore, a configuration having a cross-section portion in which a top portion 221b2 is entirely buried in a resin member 230C as in a panel structure 200C according to a third modification example shown in FIG. 20 may be adopted. According to this structure, the panel rigidity can be further increased than in the panel structure 200B according to the second modification example.

### (Other Modification Examples)

It is possible to employ various modification examples other than the examples described above.

For example, in the panel structure 200B according to the second modification example and the panel structure 200C according to the third modification example, a plurality of projected portions 221b are formed, but at least one projected portion 221b may be formed.

The panel structure of the present disclosure has been described above based on the first and second embodiments and their modification examples but is not limited thereto.

For example, the panel structure 100 of the roof can also be applied to a panel structure of a hood, a side door, a back door, or the like. For example, in a case where the panel structure 100 is applied to a hood, the inner member 120 may be attached to the outer panel member 110 in such a manner that the longitudinal direction of the inner member 120 coincides with the longitudinal direction of the vehicle. Accordingly, the panel structure 100 can be reinforced. One or more inner members 120 may be provided. In a case where a plurality of inner members 120 are arranged in such a manner that their longitudinal directions coincide with the longitudinal direction of the vehicle, the inner members 120 may have different shapes or the same shape. In addition, the inner members 120 may have different lengths or the same length. Furthermore, the arrangement of the inner members 120 is not particularly limited. For example, the inner members 120 may be arranged at equal intervals or different intervals in the width direction of the vehicle. In addition, for example, the inner members 120 may be arranged to be shifted in the longitudinal direction of the vehicle. In addition, the inner members 120 may be arranged side by side in the longitudinal direction of the vehicle at equal positions in the width direction of the vehicle.

Furthermore, the inner member 120 may have an opening portion extending in the longitudinal direction thereof. In a case where the inner member 120 is attached to the outer panel member 110 in such a manner that the longitudinal direction of the inner member 120 coincides with the longitudinal direction of the vehicle, the opening portion of the inner member 120 extending in the longitudinal direction extends in the longitudinal direction of the vehicle length.

In addition, the panel structure 200 of the hood can also be applied to a panel structure of a roof, a side door, a back door, or the like.

In addition, the modification examples described in the first and second embodiments may be applied to panel structures according to other embodiments.

### [Brief Description of the Reference Symbols]

100 vehicle panel structure
110 outer panel member
120 inner member
130 resin member
150 adhesion portion
160 adhesion portion
170 side frame
200 vehicle panel structure
210 outer panel member
220 inner member
221 main body portion
221a protrusion portion
221b peripheral wall portion
221c bottom portion
230 resin member
250 adhesion portion
1000 vehicle

## Claims

1. A vehicle panel structure comprising:
a sheet-like outer panel member;
an inner member disposed to face an inner surface of the outer panel member; and
a resin member of which a material is a resin and which is joined to the inner surface of the outer panel member,
wherein at least part of the inner member is buried in the resin member.

2. The vehicle panel structure according to claim 1,
wherein the inner member extends along one direction in an in-plane direction of the outer panel member.

3. The vehicle panel structure according to claim 2,
wherein a cross-section portion perpendicular to the extending direction of the inner member, in which the inner member is entirely buried in the resin member, is provided.

4. The vehicle panel structure according to claim 2 or 3,
wherein a plurality of the inner members are provided, and
the plurality of inner members are disposed in parallel to be separated from each other in a direction perpendicular to the one direction in the in-plane direction of the outer panel member.

5. The vehicle panel structure according to claim 1,
wherein the inner member has a sheet-like main body portion disposed to face the inner surface of the outer panel member,
the main body portion has a protrusion portion protruding toward the outer panel member, and
a cross-section portion perpendicular to an in-plane direction of the outer panel member, in which a tip end of the protrusion portion is buried in the resin member, is provided.

6. The vehicle panel structure according to claim 5,
wherein a cross-section portion perpendicular to the in-plane direction of the outer panel member, in which a surface of the protrusion portion close to the outer panel member is entirely buried in the resin member, is provided.

7. The vehicle panel structure according to claim 1,
wherein the inner member has a sheet-like main body portion disposed to face the inner surface of the outer panel member,
the main body portion has a projected portion including a peripheral wall portion which stands up toward the outer panel member and a top portion which is bent and extends from an end edge of the peripheral wall portion on an outer panel member side and has an opening portion formed at a center, and
a cross-section portion perpendicular to an in-plane direction of the outer panel member, in which at least part of the top portion is buried in the resin member, is provided.

8. The vehicle panel structure according to claim 7,
wherein a cross-section portion perpendicular to the in-plane direction of the outer panel member, in which the top portion is entirely buried in the resin member, is provided.

9. The vehicle panel structure according to any one of claims 1 to 8,
wherein the resin member is a thermosetting resin.

10. The vehicle panel structure according to any one of claims 1 to 8,
wherein the resin member is a thermoplastic resin.

11. The vehicle panel structure according to any one of claims 1 to 10,
wherein a plurality of the resin members are provided, and
the plurality of resin members are connected to each other along an in-plane direction of the outer panel member.

12. The vehicle panel structure according to claim 11,
wherein the plurality of resin members are connected to each other with an adhesive.

13. The vehicle panel structure according to claim 11 or 12,
wherein the plurality of resin members are connected to each other by engagement.

14. The vehicle panel structure according to any one of claims 1 to 13,
wherein an adhesion portion joining the outer panel member and the resin member and an adhesion portion joining the outer panel member and the inner member are made of the same material.

15. The vehicle panel structure according to any one of claims 1 to 14,
wherein the outer panel member has a tensile strength of 440 MPa or greater.

16. The vehicle panel structure according to any one of claims 1 to 15,
wherein the outer panel member has a sheet thickness of 0.30 mm or greater and 0.55 mm or less.

17. The vehicle panel structure according to any one of claims 1 to 16,
wherein a part having a maximum length in a direction perpendicular to an in-plane direction of the outer panel member of the resin member has a thickness of 3 mm or greater and 60 mm or less.
